# EUROPÄISCHE PATENTANMELDUNG

(11) **EP 1 049 280 A2**
(43) Veröffentlichungstag der Anmeldung: **02.11.2000**
(21) Anmeldenummer: 00440082.6
(22) Anmeldetag: 17.03.2000
(51) Int. Cl.: H04J 3/06, H04Q 11/04

(54) **Kontrollierter Schlupf bei der Übertragung eines synchronen Datenstromes über ein asynchrones Nachrichtennetz**

(30) Priorität: 30.04.1999 DE 19919691
(71) Anmelder: ALCATEL, 75008 Paris (FR)
(72) Erfinder: Wolf, Michael Dr., 74395 Mundelsheim (DE)
(74) Vertreter: Urlichs, Stefan

(57) **Zusammenfassung**

Ein synchroner Datenstrom zwischen einem Sender (11) und einem Empfänger (12; 20) kann über eine Transportstrecke in einem nach einem asynchronen Übertragungsverfahren arbeitenden Nachrichtennetz (15), beispielsweise einem ATM-Netz, übertragen werden. Dazu müssen Sender (11) und Empfänger (12; 20) synchron miteinander arbeiten. Eine Synchronisierung auf einen einheitlichen Netztakt ist jedoch nicht immer möglich. Dann wird zum Ausgleich eines Frequenzunterschiedes zwischen den Synchronisationstakten von Sender (11) und Empfänger (12; 20) ein Schlupf durchgeführt. Dieser führt jedoch zu Beeinträchtigungen.

Gemäß der Erfindung wird ein Schlupf in Zeitspannen ausgeführt, in denen seine Auswirkung auf den übertragenen Dateninhalt gering ist, z.B. in Sprechpausen. Dies wird erreicht, indem der in dem Empfänger (12; 20) ankommende Datenstrom überwacht wird um solche Zeitspannen zu detektieren, und indem ein Schlupf bevorzugt in einer solchen Zeitspannen ausgeführt wird.

## Beschreibung

Die Erfindung betrifft ein Verfahren zum Übertragen eines synchronen Datenstromes über eine Transportstrecke in einem asynchron arbeitenden Nachrichtennetz nach dem Oberbegriff des Anspruchs 1 und einen Empfänger zum Empfangen eines solchen Datenstromes nach dem Oberbegriff des Anspruchs 7.

Es sind breitbandige Nachrichtennetze bekannt, die nach einem asynchronen Übertragungsverfahren arbeiten. Das bekannteste solche Übertragungsverfahren wird als ATM (Asynchroner Transport Modus) bezeichnet. Die Grundzüge dieses Verfahrens sind in dem Artikel "ATM: Schlüssel zum "Informations-Highway"" von G. Koch et al., Telekom Unterrichtsblätter Jg. 48, 4/1995, S.196-205 beschrieben. Entsprechend diesem Verfahren werden alle eingehenden Informationen in Zellen gleicher Länge verpackt, mit einem Zellkopf versehen und über eine Multiplexeinrichtung auf die Übertragungsleitung gegeben.

Neben zeitunkritischen Informationen wie Text- und Datenübertragung müssen auch zeitkritische Informationen wie Sprache, Videosignale und isochrone Bitströme über solche asynchronen Nachrichtennetze übertragen werden können. Dazu wurde in der dritten Protokollschicht, dem ATM Adaptation Layer (AAL), die Übertragungsfunktion AAL-Typ-1 (AAL1) festgelegt, die für zeitkontinuierliche Dienste mit fester Übermittlungsrate wie z.B. Sprache vorgesehen ist.

Bei der Übertragung der genannten zeitkritischen Informationen ist es erforderlich, daß Sender und Empfänger synchron miteinander arbeiten. Anderenfalls kann Datenverlust bei der Übertragung auftreten. Bei der Synchronisation des Empfängers auf die mittlere Taktrate des empfangenen Datenstroms kann, wegen der angesprochenen Übertragung die resultierende Phasenschwankung über einem maximal zulässigen Grenzwert liegen.

Eine Alternative stellt die externe Synchronisation der Endgeräte dar. Dazu ist es jedoch erforderlich, daß in dem Nachrichtennetz ein einheitlicher Netztakt zur Verfügung steht, z.B. ein 2 MHz-Takt. Dies ist jedoch nicht immer der Fall. So kann zum einen der Netztakt gestört sein, was bei den zeitkritischen Diensten zu Datenverlust bei der Übertragung führen würde. Zum anderen kann ein einheitlicher Netztakt auch prinzipiell nicht zur Verfügung stehen, z.B. bei internationalen Verbindungen und bei ATM-Verbindungen über nicht-synchrone Übertragungssysteme wie lokale Datennetze (LANs).

Für diesen Fall wurde inzwischen vorgeschlagen, zum Ausgleich von Frequenzunterschieden bei Synchronisationsstörungen oder im internationalen Datenverkehr den aus der PCM-Technik (pulse code modulation) bekannten kontrollierten Schlupf zu verwenden. Dies führt jedoch unvermeidlich zu Beeinträchtigungen bei der Übertragung. Insbesondere bei der Übertragung über nicht-synchrone Übertragungssysteme wäre die resultierende Schlupfrate zu hoch.

Es ist daher eine Aufgabe der Erfindung, ein Verfahren anzugeben, mit dem synchrone oder annähernd synchrone (plesiochrone oder isochrone) Datenströme über ein asynchrones Nachrichtennetz übertragen werden können und dabei geringere bemerkbare Störungen auftreten als bisher. Eine weitere Ausgabe der Erfindung besteht darin, einen Empfänger anzugeben, der solche Datenströme empfangen kann und bei dem der Informationsgehalt empfangener Datenströme bei Schwankungen der Übertragungsrate weniger beeinträchtigt ist als bisher.

Die Aufgabe wird hinsichtlich des Verfahrens gelöst durch die Merkmale des Anspruchs 1 und hinsichtlich des Empfängers durch die Merkmale des Anspruchs 7. Vorteilhafte Weiterbildungen sind in den abhängigen Ansprüchen angegeben.

Besondere Vorteile der Erfindung bestehen darin, daß mit allen Übertragungsraten gearbeitet werden kann, daß ein einheitlicher Netztakt nicht erforderlich ist und daß das erfindungsgemäße Verfahren über die bestehenden Nachrichtennetze ausgeführt werden kann.

Die Erfindung eignet sich besonders bei der Übertragung von Sprache, die nach dem PCM-Verfahren (pulse code modulation) kodiert ist, über eine ATM-Verbindung (ATM: Asynchroner Transport Modus).

Im folgenden wird die Erfindung anhand der Figuren 1-4 in zwei Ausführungsbeispielen erläutert. Es zeigt:
- Figur 1:: Zwei Endgeräte als Sender und Empfänger eines synchronen Datenstromes über ein asynchrones Nachrichtennetz in einem ersten Ausführungsbeispiel der Erfindung,
- Figur 2:: ein Blockschaltbild eines erfindungsgemäßen Empfängers
- Figur 3:: ein Flußdiagramm des erfindungsgemäßen Verfahrens,
- Figur 4:: zweites Ausführungsbeispiel der Erfindung, in dem zwei Endgeräte über ein ATM-Netzwerk und ein lokales Datennetz miteinander verbunden sind und
- Figur 5:: ein Blockschaltbild eines zwischen dem ATM-Netz und dem lokalen Datennetz befindlichen Netzelementes.

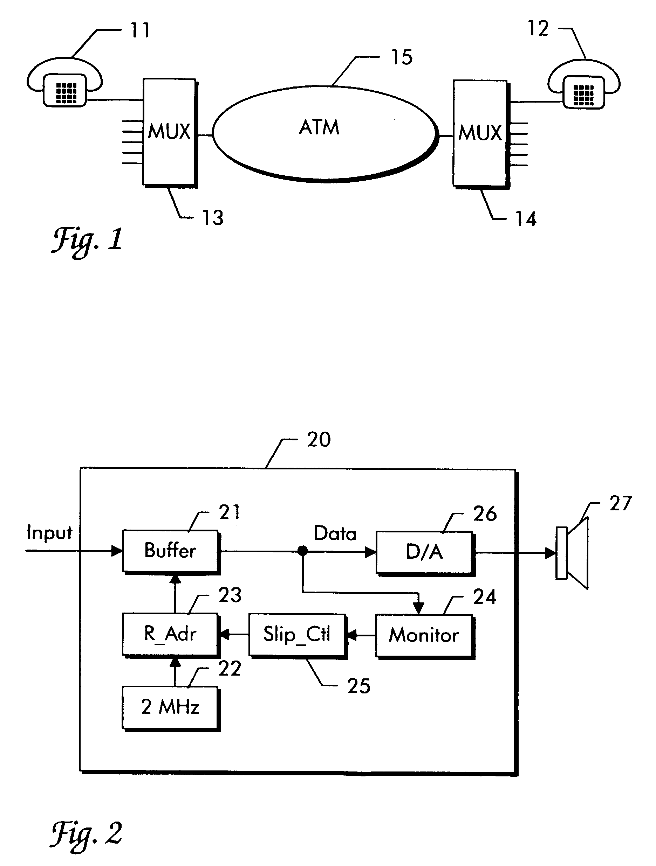

In Figur 1 sind zwei Endgeräte 11, 12 dargestellt, die jeweils an einen Multiplexer 13, 14 angeschlossen sind. Die beiden Multiplexer 13, 14 sind über ein Nachrichtennetz miteinander verbunden, das nach dem ATM-Übertragungsverfahren arbeitet. Bei den beiden Endgeräten 11, 12 handelt es sich um ISDN-Telefone (ISDN: integrated services digital network). Die Multiplexer 13, 14 sind ATM-Multiplexer einer üblichen Vermittlungsstelle. Über das ATM-Netz 15 wird eine bidirektionale ISDN-Verbindung mit einer Übertragungsrate von64 kBit für digitale Sprachübertragung geschaltet, über die Sprachinformation übertragen wird, die nach dem PCM-Verfahren kodiert ist. Über diese Verbindung wird nun zwischen den beiden Endgeräten ein Datenstrom, der die kodierte Sprachinformation enthält, übertragen. Jedes Endgerät arbeitet also gleichzeitig als Sender und als Empfänger. Zum besseren Verständnis wird im folgenden jedoch nur eine Übertragungsrichtung, und zwar vom Endgerät 11 zum Endgerät 12 betrachtet. Daher wird Endgerät 11 im folgenden als Sender und Endgerät 12 als Empfänger bezeichnet.

Für eine fehlerfreie Sprachübertragung müssen nun Sender 11 und Empfänger 12 synchron miteinander arbeiten. Eine Synchronisation der beiden Endgeräte 11, 12 auf eine identische externe Taktreferenz kann jedoch wie vorstehend erläutert nicht in jedem Fall durchgeführt werden.

Sender 11 und Empfänger 12 verfügen jeweils über eine eigene, interne Taktquelle, die jeweils einen Synchronisationstakt erzeugt. Der Sender erzeugt mit seinem Synchronisationstakt den synchronen Datenstrom, der die kodierte Sprachinformation enthält. Der Datenstrom wird über das ATM-Netz zu dem Empfänger transportiert. Dort wird der empfangene Datenstrom in einen Pufferspeicher des Empfängers geschrieben und mit dem empfängerseitigen Synchronisationstakt wieder ausgelesen. Der empfängerseitige Synchronisationstakt dient somit als Lesetakt zum Auslesen des Pufferspeichers. Ein Frequenzunterschied zwischen Sender und Empfänger würde nun zu einem Überlauf oder "Unterlauf" des Pufferspeichers führen. Unterlauf des Pufferspeichers bedeutet dabei, daß der Speicher zu leer ist, da er schneller ausgelesen als gefüllt wurde und daß somit ein weiteres Auslesen mangels gespeicherter Daten nicht mehr möglich ist. Um diesen Über- oder Unterlauf zu vermeiden, wird bei erreichen eines oberen oder unteren Schwellenwertes für den Füllstand des Pufferspeichers ein Schlupf ausgeführt. Dabei wird entweder ein Teil des Pufferspeichers doppelt ausgelesen (positiver Schlupf) oder es wird beim Auslesen ein Teil des Pufferspeichers übersprungen (negativer Schlupf). Dadurch wird der Füllstand des Pufferspeichers wieder in einen Bereich gebracht, in dem kein Über- oder Unterlauf auftreten kann. Ein solcher Schlupf ist mit einem Datenverlust verbunden, der sich bei Gesprächsverbindungen als Störung, z.B. als Knacksen, bemerkbar macht.

Um nun den Einfluß eines Schlupfes auf den Dateninhalt des Datenstromes zum minimieren, besteht ein Grundgedanke der Erfindung darin, den Schlupf durch "Hineinhören" in den Datenstrom genau dann auszuführen, wenn seine Auswirkung auf den Dateninhalt minimal ist. Bei Gesprächsverbindungen ist dies z.B. in Sprechpausen der Fall. Ein Schlupf wird also gemäß der Erfindung zu Zeitpunkten ausgeführt, an denen er nicht zu bemerkbaren Störungen führt.

Ein Empfänger 20, der auf die beschriebene Weise arbeitet, ist in Figur 2 als erstes Ausführungsbeispiel gezeigt. Der Empfänger 20 enthält einen Pufferspeicher 21, in dem der empfangene Datenstrom gespeichert wird, und eine Taktquelle 22, mit der ein Synchronisationstakt zum Auslesen des Pufferspeichers 21 erzeugt wird. Das Einschreiben des Datenstromes wird auf übliche Art und Weise vorgenommen, auf die hier nicht im einzelnen eingegangen wird.

Als Taktquelle 22 wird ein freilaufender Quarzoszillator verwendet, der eine Frequenz von 2 MHz erzeugt. Ein Leseadressengenerator 24, im Ausführungsbeispiel ein einfacher Zähler, erzeugt Leseadressen zum Auslesen des Pufferspeichers 21. Eine Überwachungseinrichtung 24 überwacht den ausgelesenen Datenstrom und detektiert Zeitspannen, in denen die Auswirkung eines Schlupfes auf den übertragenen Dateninhalt gering wäre. Im Ausführungsbeispiel werden Gesprächspausen, d.h. Sprechpausen des senderseitigen Teilnehmers, detektiert. Eine Steuerungsschaltung 25 überwacht den Füllstand des Pufferspeichers 21 und führt einen Schlupf aus, wenn der Füllstand einen oberen Schwellenwert überschritten oder einen unteren Schwellenwert unterschritten hat und wenn gleichzeitig eine Gesprächspause vorliegt. Für einen Schlupf wird einfach durch die Steuerungsschaltung 25 der aktuelle Adressenwert des Leseadressengenerators 24 um einen vorbestimmten Wert, der z.B. einer Rahmenlänge entspricht, erhöht (negativer Schlupf) oder erniedrigt (positiver Schlupf). Ein Schlupf kann notfalls auch außerhalb einer Gesprächspause durchgeführt werden, wenn der jeweilige Schwellenwert um mehr als einen vorbestimmten Wert über- bzw. unterschritten wird ohne daß eine Gesprächspause auftrat. Dadurch kann ein Über- oder Unterlauf des Pufferspeichers auch dann vermieden werden, wenn keine Gesprächspausen auftreten. Ein Schlupf wird jedoch vorzugsweise in einer von der Überwachungseinrichtung 24 detektierten Gesprächspause ausgeführt. Dadurch wird der Einfluß des Schlupfes auf den Dateninhalt des übertragenen Datenstromes minimiert.

Die vorstehend beschriebenen Baugruppen 21-25 können vorzugsweise in integrierter Form Teil einer Schnittstellenschaltung des Empfängers 20 sein. Die aus dem Pufferspeicher ausgelesenen Daten werden in dem Empfänger 20 nun einem Digital-Analog-Wandler D/A 26 zugeführt. Das von dem D/A-Wandler 26 erzeugte Analogsignal wird auf einem externen Lautsprecher 27 wiedergegeben.

Es können durch einen Schlupf auch mehrere Rahmen auf einmal übersprungen werden. Vorzugsweise wird durch die Ausführung des Schlupfes der Füllstand auf die Mitte des Pufferspeichers zentriert, so daß der Pufferspeicher danach in etwa halb voll ist. Im Fall von ungerahmten Signalen kann durch einen Schlupf ein beliebiges Stück des Datenstroms beim Auslesen übersprungen oder wiederholt werden, wobei die Länge vorzugsweise so zu wählen ist, daß der Pufferspeicher anschließend wieder zentriert ist. Wird ein kontinuierlicher, d.h. permanent vorhandener und in etwa konstanter, Frequenzoffset zwischen dem Synchronisationstakt des Senders, mit dem der Datenstrom im Mittel empfangen wird, und dem Synchronisationstakt des Empfängers detektiert, so ist es vorteilhaft, den Füllstand des Pufferspeichers durch einen Schlupf an die entgegengesetzte Grenze des Pufferspeichers zu bringen. Dadurch wird die Zeitspanne bis zum nächsten Schlupf vergrößert. Im Fall von unregelmäßigen Phasenschwankungen ist ein Zentrieren des Füllstandes des Pufferspeichers jedoch die bessere Lösung.

Das Detektieren von Gesprächspausen ist an sich prinzipiell bekannt, z.B. von statistischen Multiplexern für Satellitenübertragung, und soll hier nicht näher beschrieben werden. Auch bei anderen Dateninhalten als kodierter Sprache kann die Erfindung angewendet werden, z.B. bei Videodaten. Hierbei soll der Schlupf in Pausen zwischen einzelnen Datenpaketen ausgeführt werden. Die Überwachungseinrichtung detektiert daher Pausen zwischen Datenpaketen.

Sprachpausen und Pausen zwischen Datenpaketen werden heuristisch detektiert. Es kann daher auftreten, daß ein Schlupf an einer falschen Stelle ausgeführt wird, weil entweder keine Pause auftrat oder weil eine Pause falsch erkannt wurde. Dies führt zu einer Restfehlerrate, die jedoch geringer ist, als würde die Entscheidung über den Schlupf ausschließlich anhand des Pufferfüllstandes getroffen.

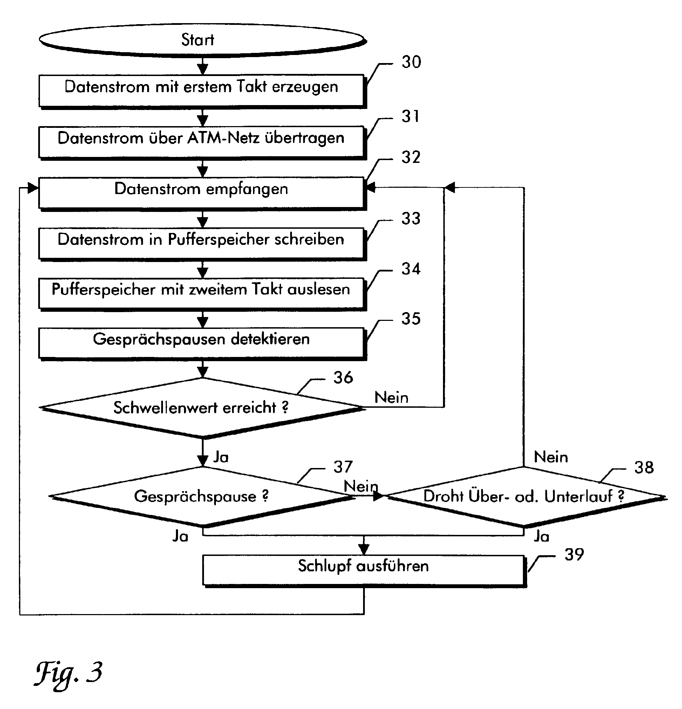

In dem Ausführungsbeispiel läuft das Verfahren nach den in Figur 3 als Flußdiagramm dargestellten Schritten ab:
- Schritt 30:: Im Sender wird mit einem ersten Synchronisationstakt ein Datenstrom erzeugt.
- Schritt 31:: Der Datenstrom wird über eine Transportstrecke in einem asynchron arbeitenden Nachrichtennetz übertragen.
- Schritt 32:: In einem Empfänger wird der Datenstrom empfangen.
- Schritt 33:: Der empfangene Datenstrom wird in einem Pufferspeicher des Empfängers geschrieben.
- Schritt 34:: Der Pufferspeicher wird mit einem zweiten Synchronisationstakt, der in dem Empfänger erzeugt wird, ausgelesen.
- Schritt 35:: Mittels einer Überwachungseinrichtung wird der Datenstrom auf Gesprächspausen überwacht.
- Schritt 36:: Es wird geprüft, ob der Füllstand des Pufferspeichers einen oberen oder einen unteren Schwellenwert erreicht hat. Wenn nicht, so wird kein Schlupf ausgeführt und der Datenstrom wird weiter normal empfangen (Schritt 32).
- Schritt 37:: Ist einer der Schwellenwerte erreicht, so wird geprüft, ob gerade eine Gesprächspause vorliegt.
- Schritt 39:: Liegt eine Gesprächspause vor (Schritt 37), so wird ein Schlupf ausgeführt um den Füllstand des Pufferspeichers wieder zu zentrieren. Anschließend wird der Datenstrom weiter normal empfangen (Schritt 32).
- Schritt 38:: Liegt keine Gesprächspause vor (Schritt 37), so wird geprüft, ob der Schwellenwert bereits so weit über- bzw. unterschritten ist, daß ein Über- bzw. Unterlauf des Pufferspeichers droht. Wenn dies der Fall ist, dann wird der Schlupf trotzdem ausgeführt (Schritt 39).
Anderenfalls wird kein Schlupf ausgeführt und der Datenstrom wird weiter normal empfangen, um auf eine Gesprächspause zu warten (Schritt 32).

Das Verfahren endet mit dem Ende des Datenstromes, d.h., wenn der Sender keine weiteren Daten mehr sendet.

Bei einer besonders vorteilhaften Ausgestaltung des erfindungsgemäßen Verfahrens wird bei Aufbau der Verbindung zwischen Sender und Empfänger die Größe des zur Zwischenspeicherung des empfangenen Datenstromes verwendeten Pufferspeichers ausgehandelt und festgelegt wird. Die zu nutzende Speichertiefe stellt somit beim Verbindungsaufbau einen Konfigurationsparameter der AAL1-Funktion dar. Damit wird zusammen mit der Frequenzgenauigkeit der Taktquellen von Sender und Empfänger die Schlupfrate festgelegt. Diese ist auf die Anforderungen des zu übertragenden Dateninhaltes zugeschnitten.

Für die Übertragung kodierter Sprache kann bei einer Frequenzgenauigkeit der Taktquelle im Empfänger von 20 ppm beispielsweise eine Speichertiefe von 5 msec festgelegt werden. Dies entspricht einer Speichergröße von 40 Byte bei einer Übertragungsrate von 64 kBit/sec. Daraus ergibt sich eine Schlupfrate von einem Schlupf pro 4 min. Ein Schlupf kann deshalb mit sehr großer Wahrscheinlichkeit in eine Gesprächspause gelegt werden.

Für die Übertragung kodierter Videosignale, z.B. für eine Videokonferenz, kann bei einer empfängerseitigen Frequenzgenauigkeit von 10 ppm eine Speichertiefe von 100 ms festgelegt werden. Dies entspricht einer Speichergröße von 256 kByte bei einer Übertragungsrate von 2 Mbit/sec. Ein Schlupf findet dann nach etwa 2,8 Stunden statt, d.h. der Schlupf wird sehr wahrscheinlich erst nach Beendigung der Video-Konferenz und somit gar nicht ausgeführt werden.

Das vorstehend beschriebene erste Ausführungsbeispiel geht davon aus, daß eine Sprachverbindung allein über ein ATM-Netz unter Zuhilfenahme der AAL1-Funktion aufgebaut wird. Die Erfindung ist in dieser Konfiguration z.B. bei internationalen Verbindungen, bei denen kein gemeinsamer Netztakt zur Verfügung steht oder bei Störung des Netztaktes von Vorteil. Im folgenden wird eine weitere besonders vorteilhafte Anwendung der Erfindung in einem zweiten Ausführungsbeispiel erläutert.

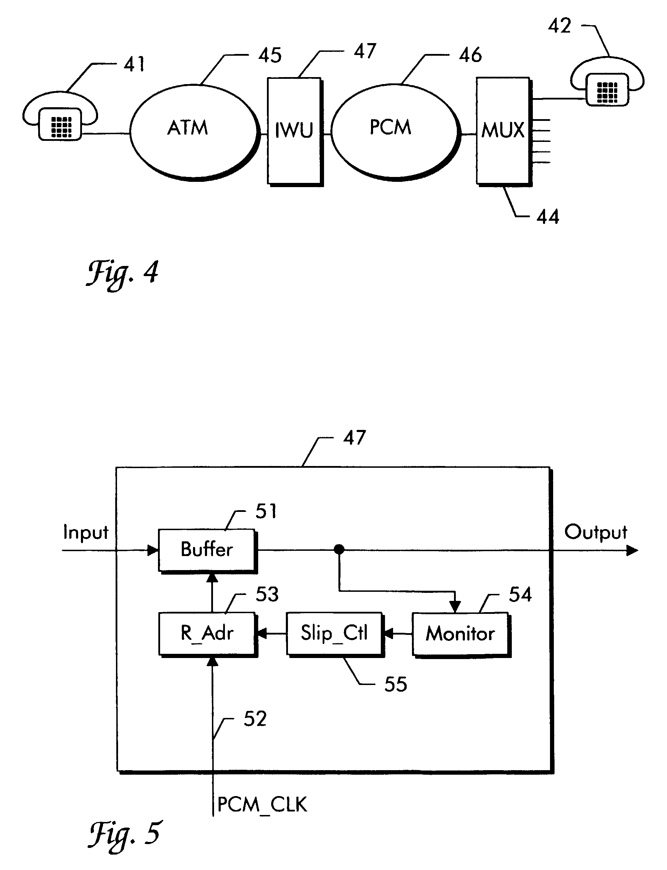

Figur 4 zeigt analog zu Figur 1 zwei Endgeräte 41 und 42. Der erste Endgerät 41 ist direkt an ein erstes Nachrichtennetz 45 angeschlossen, das nach dem ATM-Übertragungsverfahren arbeitet. Das zweite Endgerät ist an einen Multiplexer 44 angeschlossen. Der Multiplexer 44 ist mit einem Nachrichtennetz 46 zur Übertragung herkömmlicher pulskodemodulierter Nachrichtensignale im Zeitmultiplex verbunden (PCM-Netz). Die beiden Netze 45 und 46 sind über ein Netzelement IWU 47 miteinander verbunden. Das Netzelement 47 stellt eine Verbindung zwischen den beiden Netzen 45, 46 her und ist aufgrund seiner Funktion auch als Gateway oder als Interworking-Unit (IWU) zu bezeichnen. Bei den beiden Endgeräten handelt es sich um ISDN-Telefone. Zwischen den beiden Endgeräten soll eine 64kBit-Sprechverbindung aufgebaut werden. Das Netzelement 47 dazu muß die Zusammenarbeit zwischen dem ATM-Netz und dem lokalen Datennetz sicherstellen (Interworking-Funktion).

Zunächst wird nur die "Aufwärts"-Richtung von dem ersten Endgerät 41 zu dem zweiten Endgerät 42 betrachtet. Das erste Endgerät arbeitet als Sender und sendet einen synchronen Datenstrom über ATM-Netz 45. Der Datenstrom wird in dem ATM-Netz mittels der sogenannten "Circuit Emulation" mit 64kBit/sec unter Verwendung der AAL1-Funktion übertragen. Das Netzelement 47 empfängt den Datenstrom und muß diesen neu takten, da eine Taktübertragung über das ATM-Netz nicht mit ausreichend hoher Genauigkeit möglich ist.

Als Synchronisationstakt für das Netzelement 47 wird die Taktfrequenz des PCM-Netzes 46 verwendet. Ein Frequenzunterschied zwischen den Synchronisationstakten des ersten Endgerätes 41 und des Netzelementes 47 wird durch Schlupf-Operationen ausgeglichen, wenn ein Über- oder Unterlauf des zur Zwischenspeicherung verwendeten Pufferspeichers droht. Das Netzelement 47 sendet den neu getakteten Datenstrom mit einer Übertragungsrate von 64 kBit/sec als Zeitschlitz eines PCM-Signals über das PCM-Netz 46 zu dem Endgerät 42.

Ein Blockschaltbild des Netzelementes 47 ist in Figur 5 dargestellt. Dabei sind nur die zur Taktung des empfangenen Datenstromes erforderlichen Baugruppen abgebildet. Andere Baugruppen wie z.B. Schnittstellenschaltungen sind der Übersichtlichkeit halber nicht dargestellt. Der Aufbau ist analog zu dem in Figur 2 für ein Endgerät dargestellten Aufbau. Das Netzelement 47 besitzt einen Pufferspeicher 51 zur Zwischenspeicherung des empfangenen Datenstroms und einen Leseadressengenerator 53 der von einem externen, aus dem PCM-Netz empfangenen Taktsignal PCM-CLK 52 versorgt wird. Als Taktquelle dient in diesem Fall also eine Taktableitungsschaltung, die das Taktsignal aus dem vom PCM-Netz empfangenen Datenstrom ableitet.

Der aus den Pufferspeicher 51 ausgelesene Datenstrom wird von einer Überwachungseinrichtung 54 auf Gesprächspausen überwacht. Wenn eine Gesprächspause erkannt wird und der obere oder untere Schwellenwert über-bzw. unterschritten ist, so wird der Leseadressengenerator 53 über eine Steuerungsschaltung 55 so gesteuert, daß ein Schlupf ausgeführt wird. Der Datenstrom, der auf diese Weise neu getaktet wurde, wird nun als Zeitschlitz eines PCM-Signals über das PCM-Netz zum zweiten Endgerät 42 übertragen. Das Netzelement 47 arbeitet also gleichzeitig als Sender und als Empfänger.

In der Gegenrichtung, d.h. in der "Abwärts"-Richtung, erfolgt eine Synchronisierung in dem Netzelement 47 auf den vom Endgerät 42 empfangenen Datenstrom.

## Patentansprüche

1. Verfahren zum Übertragen eines zumindest annähernd synchronen Datenstromes von einem Sender (11) zu einem Empfänger (12; 20), die jeweils einen eigenen Synchronisationstakt verwenden, über eine Transportstrecke in einem asynchron arbeitenden Nachrichtennetz (15), wobei zum Ausgleich eines Frequenzunterschiedes zwischen den Synchronisationstakten von Sender (11) und Empfänger (12; 20) ein Schlupf durchgeführt wird (39),
**dadurch gekennzeichnet,** daß
der in dem Empfänger (12; 20) ankommende Datenstrom überwacht wird um Zeitspannen zu detektieren (35), in denen die Auswirkung eines Schlupfes auf den übertragenen Dateninhalt gering ist und daß ein Schlupf bevorzugt in einer solchen detektierten Zeitspanne ausgeführt wird.

2. Verfahren nach Anspruch 1, bei dem kodierte Sprache als Dateninhalt des Datenstromes übertragen wird und bei dem als Zeitspannen, in denen die Schlupfauswirkung minimal ist, Sprechpausen detektiert werden.

3. Verfahren nach Anspruch 1, bei dem kodierte Videosignale als Dateninhalt des Datenstromes übertragen werden und bei dem als Zeitspannen, in denen die Schlupfauswirkung minimal ist, Pausen zwischen einzelnen Paketen der Videosignale detektiert werden.

4. Verfahren nach Anspruch 1, bei dem in dem Empfänger (12; 20) der Datenstrom in einem Pufferspeicher (21) zwischengespeichert wird und der Füllstand des Pufferspeichers (21) durch jeden durchgeführten Schlupf zentriert wird.

5. Verfahren nach Anspruch 1, bei dem in dem Empfänger (12; 20) der Datenstrom in einem Pufferspeicher (21) zwischengespeichert wird und der Füllstand des Pufferspeichers (21) durch jeden durchgeführten Schlupf an die entgegengesetzte Grenze des Pufferspeichers (21) gebracht wird um einen annähernd konstanten Frequenzunterschied zwischen den Synchronisationstakten von Sender (11) und Empfänger (12; 20) auszugleichen.

6. Verfahren nach Anspruch 1, bei dem beim Verbindungsaufbau zwischen Sender (11) und Empfänger (12; 20) eine Speichertiefe eines zur Zwischenspeicherung des empfangenen Datenstromes verwendeten Pufferspeichers (21) festgelegt wird.

7. Empfänger (12; 20) zum Empfangen eines zumindest annähernd synchronen Datenstromes über eine Transportstrecke in einem asynchron arbeitenden Nachrichtennetz (15), mit einem Pufferspeicher (21) zum Zwischenspeichern des empfangenen Datenstromes, mit einer Taktquelle (22) zum Erzeugen eines Synchronisationstaktes zum Auslesen des Pufferspeichers (21) und mit Mitteln (25) zum Ausführen eines Schlupfes, wenn der Füllstand des Pufferspeichers (21) einen oberen Schwellenwert überschreitet oder einen unteren Schwellenwert unterschreitet,
**gekennzeichnet durch**
eine Überwachungseinrichtung (24) zum Überwachen des Datenstromes und zum detektieren von Zeitspannen, in denen die Auswirkung eines Schlupfes auf den übertragenen Dateninhalt gering ist, wobei die Überwachungseinrichtung (24) die Mittel (25) zum Ausführen des Schlupfes so steuert, daß der Schlupf bevorzugt in einer solchen detektierten Zeitspanne ausgeführt wird.
